# EUROPÄISCHE PATENTSCHRIFT

(11) **EP 3 711 292 B1**
(45) Veröffentlichungstag und Bekanntmachung des Hinweises auf die Patenterteilung: **10.07.2024**
(21) Anmeldenummer: 18796856.5
(22) Anmeldetag: 19.10.2018
(51) Int. Cl.: H04N 17/00, H04N 7/18

(54) **TESTVERFAHREN FÜR EIN KAMERASYSTEM, EIN STEUERGERÄT DES KAMERASYSTEMS, DAS KAMERASYSTEM UND EIN FAHRZEUG MIT DIESEM KAMERASYSTEM**
TEST METHOD FOR A CAMERA SYSTEM, CONTROL UNIT OF THE CAMERA SYSTEM, CAMERA SYSTEM, AND VEHICLE HAVING SUCH A CAMERA SYSTEM
PROCÉDÉ D'ESSAI POUR UN SYSTÈME DE CAMÉRAS, APPAREIL DE COMMANDE DU SYSTÈME DE CAMÉRAS, SYSTÈME DE CAMÉRAS ET VÉHICULE POURVU DE CE SYSTÈME DE CAMÉRAS

(30) Priorität: 14.11.2017 DE 102017220282
(43) Veröffentlichungstag der Anmeldung: 23.09.2020
(73) Patentinhaber: Robert Bosch GmbH, 70442 Stuttgart (DE)
(72) Erfinder: KUTTENBERGER, Alfred, 71263 Weil Der Stadt (DE); BUNZ, Michael, 70193 Stuttgart (DE); KRUSE, Marco, 71272 Renningen (DE)
(86) Internationale Anmeldenummer: PCT/EP2018/078728
(87) Internationale Veröffentlichungsnummer: WO 2019/096541

(56) Entgegenhaltungen:
- EP-A1- 3 094 075
- DE-A1- 102014 008 808
- US-A1- 2015 281 684
- US-A1- 2016 295 205

## Beschreibung

### Stand der Technik

Die vorliegende Erfindung betrifft ein Testverfahren für ein Kamerasystem, das Steuergerät des Kamerasystems und das Kamerasystem zur Durchführung des Testverfahrens sowie ein Fahrzeug mit dem Kamerasystem.

Die Schrift WO 2017/052663 A1 beschreibt eine Vorrichtung und ein Verfahren zum Senden von Testmustern über physikalische Datenkanäle.

Das Dokument WO 2005/050941 A2 beschreibt ein Speichermodul und ein Verfahren zum Betrieb eines Speichermoduls.

Das Dokument US 2015/0281684 A1 offenbart ein Bilderfassungssystem für ein Fahrzeug mit einem Schaltkreis zur Überprüfung der Pixel eines Bildsensor mit einem Pixelarray in einer Kamera die in einem Fahrzeug angeordnet seien kann. Der Bildsensor beinhaltet den Schaltkreis zur Überprüfung eines korrekten Betriebes des Bildsensors. Der Schaltkreis zur Überprüfung in dem Bildsensor kann gemäß D1 dazu eingerichtet sein, Überprüfungsdaten zu erzeugten und mit einem erwarteten Ergebnis zu vergleichen. Das erwartete Ergebnis ist beispielsweise ein "goldenes" Standardbild. Der Schaltkreis zur Überprüfung wird dazu verwendet, Testsignale auf einen oder mehrere der Pixel zu injizieren, wobei daraus resultierende Ausgangstestsignale mit Referenzdaten verglichen werden. Der Schaltkreis zur Überprüfung kann dazu verwendet werden jedes gewünschte Muster an Testsignalen an die Pixel der Zeilenkamera anzulegen. Die Dokument D1 beschreibt, dass es vorgesehen sein kann, dass, falls ein oder mehrere Pixel einer des Bildsensors ausfallen, ein Hauptrechner-Untersystem der Kamera (Host subsystem) den Bildsensor ausschaltet oder ein sichtbares Fehlersignal für einen Nutzer erzeugt, beispielsweise für einen Nutzer eines Fahrsicherheitssystems eines Fahrzeugs. Somit wird die Funktionalität eines Bildsensors auf Pixelebene durch Anlegen einer Testspannung an den Pixeln überprüft.

Das Dokument EP 3094075 A1 beschreibt eine Fehlerdiagnose in Echtzeit ohne Beeinträchtigung einer ursprünglichen Bildverarbeitungsfunktion auch während der Fahrt.

Die Fahrzeugkamera-Bildverarbeitungsvorrichtung weist eine Fehlerdiagnoseeinheit auf, die bei Empfang von Diagnoseanweisungsinformationen von der Bildverarbeitungseinheit ein Bildauswahlanweisungssignal an die Kameraeinheiten ausgibt, um das von den Kameraeinheiten ausgegebene Bild von dem erfassten Bild auf das Testbild umzuschalten.

Das Dokument DE102014008808 A1 beschreibt ein Verfahren zur Absicherung der Übertragung von sicherheitsrelevanten Kamerabildern einer an einem Kraftfahrzeug angeordneten Kamera zu einer im Kraftfahrzeug angeordneten Anzeigevorrichtung, wobei von der Kamera zur Anzeigevorrichtung zu übertragenden Kamerabildern kameraseitig ein laufender Zähler eingeprägt wird, wobei die derart veränderten Kamerabilder zur Anzeigevorrichtung übertragen werden, wobei der fortlaufende Zähler anzeigevorrichtungsseitig überprüft wird, wobei bei Feststellen eines nicht korrekt fortlaufenden Zählers innerhalb einer bestimmten Anzahl von Kamerabildern die Anzeige der Kamerabilder auf der Anzeigevorrichtung unterlassen wird.

Das Dokument US2016295205 A1 beschreibt ein Bildverarbeitungssystem mit digitalen Echtzeit-Testmöglichkeiten überprüft die Funktionalität von Bildverarbeitungsschaltungen, die zur Verarbeitung von Pixeldatensignalen verwendet werden, die während der Bildverarbeitungsvorgänge aus einer Pixelmatrix ausgelesen werden. Die Bildverarbeitungsschaltung kann einen Datenrahmen verarbeiten, der aus einem Bildfeld ausgelesen wird und mehrere Bereiche mit bildgebenden und nicht bildgebenden Daten enthält. Es können digitale Testmuster erzeugt werden, um die Funktionalität bestimmter Bildverarbeitungsblöcke zu testen. Die Testmuster können bildgebenden oder nicht bildgebenden Daten aus Bereichen des ausgelesenen Rahmens entsprechen oder diese darstellen.

Ein Prüfsummengenerator erzeugt eine Prüfsumme für die Ausgabe einer Teilmenge der Bildverarbeitungsblöcke, die mit einem bestimmten Prüfmuster versehen wurden. Die Prüfsumme des Testmusters kann mit einer vorgegebenen Prüfsumme der Ausgabe von ordnungsgemäß funktionierenden Bildverarbeitungsblöcken verglichen werden, die mit Testmustern versehen sind, die dem gegebenen Testmuster entsprechen.

### Offenbarung der Erfindung

Die Erfindung betrifft ein Testverfahren für ein Kamerasystem gemäß Anspruch 1, wobei das Kamerasystem ein Steuergerät und mindestens eine Kamera aufweist. Das Testverfahren beginnt unmittelbar nach einem Laden eines Betriebssystems des Steuergeräts mit einer Erzeugung von übertragungsfähigen Bilddaten in Abhängigkeit mindestens eines aus einem elektronischen Kameraspeicher der Kamera geladenen Ursprungsbildes. Die erzeugten Bilddaten werden anschließend von der Kamera an das Steuergerät übertragen. Danach ein Zwischenbild in Abhängigkeit der von dem Steuergerät empfangenen Bilddaten erzeugt. Anschließend erfolgt eine Ermittlung eines aufbereiteten Bildes in Abhängigkeit des erzeugten Zwischenbildes. Das aufbereitete Bild wird in einem weiteren Schritt mit einem Referenzbild verglichen, wobei das Referenzbild aus einem Speicher des Steuergerätes geladen wird. Bei einer Abweichung des aufbereiteten Bildes von dem Referenzbild wird ein Fehlersignals erzeugt. Dadurch entsteht der Vorteil, dass für eine automatisierte oder teilautomatisierte Steuerung eines Fahrzeugs im Straßenverkehr der Betrieb des Steuergeräts des Kamerasystems und eine Übertragung der Bilddaten zwischen der Kamera und dem Steuergerät überprüft werden. Demnach werden durch das Testverfahren vorteilhafterweise die sicherheitskritischen Basisfunktionen des Kamerasystems überprüft und ein Fehlersignal erzeugt, falls das Kamerasystem nicht bestimmungsgemäß funktioniert.

In einer bevorzugten Ausgestaltung repräsentiert das mindestens eine Ursprungsbild ein Testmuster, wobei das Testmuster vorteilhafterweise jeweils unterschiedliche Helligkeitswerte, unterschiedliche Grauwerte, unterschiedliche Pixelumgebungen und/oder unterschiedliche Farbwerte aufweist. Dadurch werden die Übertragungsstrecken und die Ermittlung eines aufbereiteten Bildes für unterschiedliche Bildinhalte geprüft.

In einer besonders bevorzugten Ausgestaltung erfolgt nach der Ermittlung des aufbereiteten Bildes eine Ermittlung einer ersten Prüfsumme in Abhängigkeit einer bestimmten Bildinformation von mindestens zwei Bildpixeln des aufbereiteten Bildes. Die Bildinformation ist jeweils einem Bildpixel zugeordnet und kann dem Pixelinhalt des aufbereiteten Bildes entsprechen oder optional mittels eines Algorithmus in Abhängigkeit des Pixelinhalts und/oder der zu dem Bildpixel benachbarten Bildpixel bestimmt werden. Beispielsweise ist die Bildinformation ein Graustufenwert und/oder eine Helligkeit und/oder ein Beschreibungsmaß für die den Bildpixel umgebenden Bildpixel. Anschließend erfolgt eine Ermittlung oder ein Auslesen einer zweiten Prüfsumme des Referenzbildes. Die Ermittlung der zweiten Prüfsumme des Referenzbildes ist in Abhängigkeit der Bildinformation von mindestens zwei Bildpixeln des Referenzbildes vorgesehen. Es kann alternativ das Auslesen der zweiten Prüfsumme aus einem Speicher des Steuergerätes vorgesehen sein. In dieser Ausgestaltung wird der Vergleich des aufbereiteten Bildes mit dem Referenzbild in Abhängigkeit der ersten Prüfsumme und/oder der zweiten Prüfsumme durchgeführt. Der Vergleich des aufbereiteten Bildes mit dem Referenzbild ist in dieser Ausgestaltung vorteilhafterweise effektiv, das heißt der Vergleich benötigt wenig Rechenoperationen und ist zuverlässig und schnell.

Vorzugsweise wird in einer weiteren Ausführung die Ermittlung des mindestens einen aufbereiteten Bildes zusätzlich in Abhängigkeit von Testparametern durchgeführt. Die Testparameter repräsentieren Standardparameter in den Algorithmen zur Erzeugung des Zwischenbildes und/oder zur Ermittlung des aufbereiteten Bildes. Dadurch wird vorteilhafterweise erreicht, dass die Parameter in den Rechnungen auf die Standardparameter zurückgesetzt werden, falls die Parameter in den Algorithmen im Normalbetrieb beispielsweise an die Helligkeit angepasst werden.

In einer Weiterführung kann es vorgesehen sein, dass nach der Erzeugung des Fehlersignals eine Erfassung mindestens eines Kamerabildes der Kamera erfolgt. Anschließend wird ein Steuersignals des Steuergerätes in Abhängigkeit des erfassten Kamerabildes erzeugt. Das Steuersignal ist dazu eingerichtet, einen Lenkmotor, einen Antriebsmotor, eine Bremse und/oder eine Anzeigevorrichtung eines Fahrzeugs anzusteuern. Das Steuersignal wird in Abhängigkeit des erzeugten Fehlersignals angepasst. In dieser Weiterführung wird bei einem erkannten Fehler, welcher durch das erzeugte Fehlersignal repräsentiert wird, die Steuerung eines Fahrzeugs unterbunden. Dadurch wird vermieden, dass das Steuergerät das Fahrzeug in sicherheitskritische Fahrsituationen führt.

Die Erfindung betrifft auch das Steuergerät für das Kamerasystem gemäß Anspruch 5. Das Steuergerät ist unmittelbar nach dem Laden des Betriebssystems des Steuergeräts dazu eingerichtet, mittels einer Empfangseinheit Bilddaten von einer Kamera des Kamerasystems zu empfangen. Das Steuergerät ist des Weiteren dazu eingerichtet, ein Fehlersignal bei Abweichung eines aufbereiteten Bildes von einem Referenzbild zu erzeugen, wobei das aufbereitete Bild mittels einer Recheneinheit in Abhängigkeit der empfangenen Bilddaten ermittelt und das Referenzbild aus einem Speicher des Steuergeräts geladen wird.

Die Erfindung betrifft darüber hinaus das Kamerasystem für ein Fahrzeug. Das Kamerasystem weist mindestens eine Kamera und das erfindungsgemäße Steuergerät auf. Das Kamerasystem ist dazu eingerichtet, das Testverfahren durchzuführen.

Die Erfindung betrifft des Weiteren ein Fahrzeug mit dem Kamerasystem.

Weitere Vorteile ergeben sich aus der nachfolgenden Beschreibung von Ausführungsbeispielen mit Bezug zu den Figuren.
Figur 1: Fahrzeug mit dem Kamerasystem
Figur 2: Kamerasystem mit Steuergerät
Figur 3: Verfahrensablauf als Blockschaltbild

### Ausführungsbeispiele

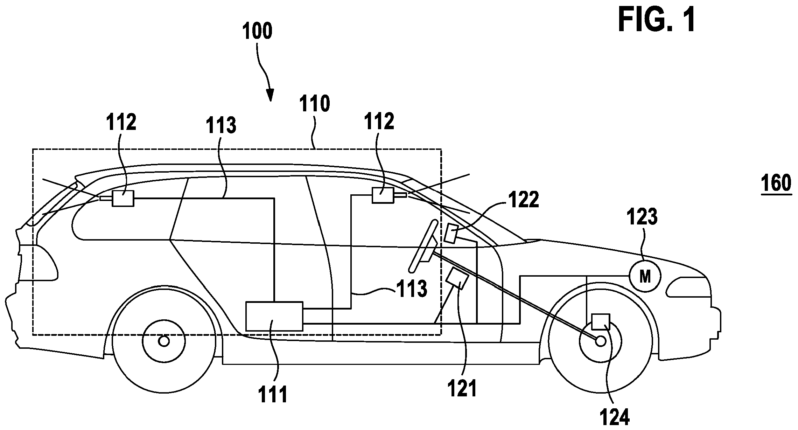

In Figur 1 ist ein Fahrzeug 100 dargestellt. Am Fahrzeug 100 ist ein Kamerasystem 110 angeordnet. Das Kamerasystem 110 weist mindestens ein Steuergerät 111 und mindestens eine Kamera 112 auf, wobei in Figur 1 beispielhaft zwei Kameras 112 dargestellt sind. Das Steuergerät 111 und die mindestens eine Kamera 112 sind mit einem Datenkabel 113 zur Übertragung von Bilddaten der Kamera 112 an das Steuergerät 111 verbunden. Alternativ kann die Übertragung der Bilddaten von der Kamera 112 an das Steuergerät 111 kabellos durch Funk erfolgen, beispielsweise durch eine WLAN- oder Bluetooth-Verbindung. Zum Empfang der Bilddaten weist das Steuergerät eine Empfangseinheit auf. Im Falle einer Verbindung mittels des Datenkabels ist die Empfangseinheit beispielsweise eine Steckerschnittstelle. Das Steuergerät 111 ist dazu eingerichtet, ein Steuersignal zur Steuerung des Fahrzeugs 100 in Abhängigkeit mindestens eines Kamerabildes der Kamera 112 zu erzeugen, wobei das Steuersignal dazu eingerichtet ist, einen Lenkmotor 121, eine Anzeigevorrichtung 122, einen Antriebsmotor 123 und/oder eine Bremse 124 des Fahrzeugs 100 anzusteuern. Die Steuerung des Fahrzeugs 100 erfolgt beispielsweise in Abhängigkeit der mittels des Kamerasystems 110 erfassten Kamerabilder automatisch oder teilautomatisch, beispielsweise wird ein automatisches Einparken des Fahrzeugs 100 gesteuert, wobei die Kamerabilder dem Fahrer des Fahrzeugs 100 bevorzugt zusätzlich auf der Anzeigevorrichtung 122 angezeigt werden. Die Zuverlässigkeit der Funktion des Steuergerätes 111 ist sicherheitsrelevant für Insassen des Fahrzeugs 100 und Fremdfahrzeuge beziehungsweise Personen in der Umgebung 160 des Fahrzeugs 100.

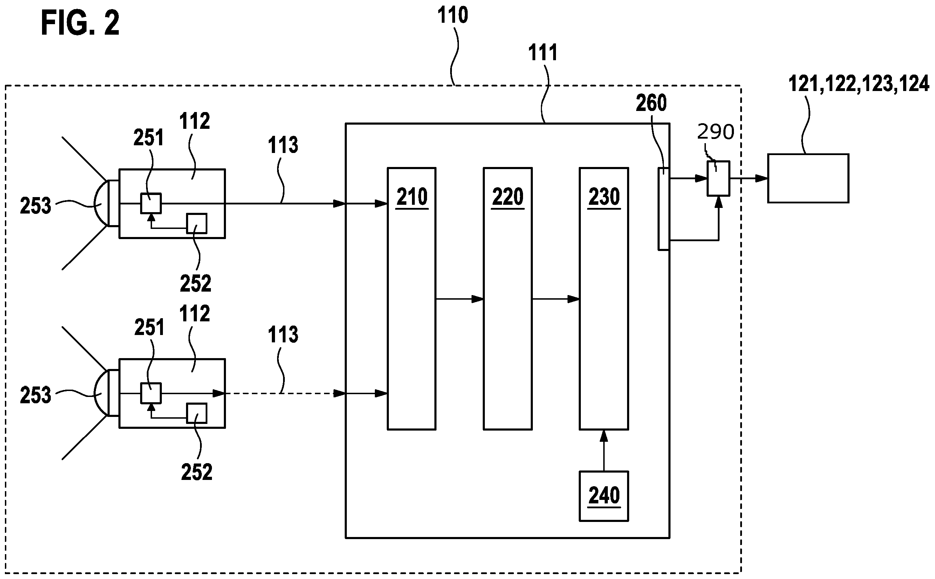

In Figur 2 ist das Kamerasystem 110 dargestellt. Das Kamerasystem 110 weist zwei Kameras 112 und ein Steuergerät 111 sowie die Datenkabel 113 zwischen den Kameras 112 und dem Steuergerät 111 zur Übertragung der Bilddaten auf, wobei die Bilddaten serialisierte Bilddaten sind. Die Kamera 112 weist jeweils eine Optik 253, einen Serializer 251 beziehungsweise eine Kamerarecheneinheit 251 und einen elektronischen Kameraspeicher 252 auf. Die Kamerarecheneinheit 251 erfasst im Normalbetrieb mittels der Kameraoptik 253 ein Kamerabild. Die Kamerarecheneinheit 251 beziehungsweise der Serializer 251 erzeugt anschließend die Bilddaten in Abhängigkeit des erfassten Kamerabildes, nämlich serialisierte Bilddaten, welche das erfasste Kamerabild repräsentieren und übertragungsfähig sind. Gemäß der vorliegenden Erfindung ist die Kamerarecheneinheit 251 dazu eingerichtet, nach dem Einschalten des Steuergeräts 111 und/oder der Kamera 112 zunächst mindestens ein Ursprungsbild als Testbild aus dem elektronischen Kameraspeicher 252 zu laden und in Abhängigkeit des geladenen Ursprungsbildes die Bilddaten zu erzeugen, welche das Ursprungsbild repräsentieren und beispielsweise mittels des Datenkabels 113 übertragungsfähig sind. Das Steuergerät 111 des Kamerasystems 110 empfängt diese Bilddaten, mittels einer Empfangseinheit, wobei die Bilddaten serialisiert empfangen werden. Das Steuergerät 111 umfasst wenigstens eine erste Recheneinheit 210, welche die mittels des Datenkabels 113 übertragenen Bilddaten der Kamera 112 erfasst. Anschließend erzeugt die erste Recheneinheit 210 bzw. der Deserializer 210 des Steuergeräts 111 ein Zwischenbild in Abhängigkeit der erfassten Bilddaten, nämlich der serialisierten Bilddaten. Die zweite Recheneinheit 220 des Steuergeräts 111 erfasst das erzeugte Zwischenbild und ermittelt ein aufbereitetes Bild in Abhängigkeit des erzeugten Zwischenbildes. Die dritte Recheneinheit 230 des Steuergeräts 111 vergleicht das ermittelte aufbereitete Bild mit wenigstens einem Referenzbild, wobei das Referenzbild aus einem Speicher 240 des Steuergeräts 111 geladen wird. Das Referenzbild repräsentiert ein erwartetes Bild zu dem in Abhängigkeit des geladenen Übertragungstestbildes aufbereiteten Bild. Bei einer Abweichung zwischen dem aufbereiteten Bild und dem Referenzbild erzeugt das Steuergerät 111 beziehungsweise die dritte Recheneinheit 230 ein Fehlersignal. Das Fehlersignal repräsentiert eine Funktionsstörung des Steuergerätes 111 bzw. der Bildkette zwischen der Kamera 112 und dem Steuergerät 111. Das erzeugte Fehlersignal ist beispielsweise dazu eingerichtet, ein Steuersignal, welches durch das Steuergerät 111 beispielsweise zur Steuerung des Fahrzeuges erzeugt wird, anzupassen, insbesondere zu unterdrücken. Dazu kann ein optionales Anpassungsmittel 290 vorgesehen sein, welches das Steuersignal in Abhängigkeit des Fehlersignals anpasst. In einer möglichen Ausgestaltung können die ersten Recheneinheit 210, die zweite Recheneinheit 220 und/oder die dritte Recheneinheit 230 durch eine gemeinsame Recheneinheit 210, 220 und 230 ersetzt werden. Es kann vorgesehen sein, dass zwischen der dritten Recheneinheit 230 und einer Ausgangsschnittstelle 260 des Steuergerätes 111 wenigstens eine weitere Recheneinheit angeordnet ist, beispielsweise dient diese weitere Recheneinheit zur Bestimmung des optischen Flusses und/oder zur Ermittlung des Steuersignals in Abhängigkeit eines erfassten Kamerabildes beziehungsweise einer Folge von Kamerabildern (nicht dargestellt).

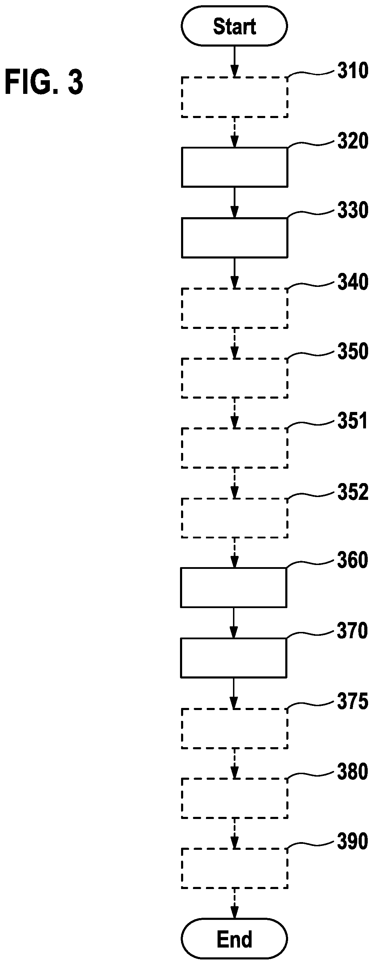

In Figur 3 ist ein Ablauf des Testverfahrens für eine Bildkette des Steuergeräts 111 eines Kamerasystems 110 als Blockschaltbild dargestellt. Zunächst erfolgt ein optionales Einschalten des Steuergeräts 111. Das Steuergerät 111 booted anschließend im Schritt 310. Beim Booten 310 wird das Betriebssystem des Steuergeräts 111 geladen. Die Kamera 112 erzeugt daraufhin, unmittelbar nach Ende des Ladens 310 des Betriebssystems, in einem Schritt 311 die Bilddaten mittels der Kamerarecheneinheit 251 in Abhängigkeit eines aus einem Kameraspeicher 252 geladenen Ursprungsbildes. Diese Bilddaten, nämlich serialisierte Bilddaten, werden in einem nächsten Schritt von der Kamera 112 an das Steuergerät 112 übertragen. Demnach empfängt das Steuergerät 111 im Schritt 320 die Bilddaten von der Kamera 112. Der Empfang 320 der Bilddaten erfolgt insbesondere mittels der Kameraschnittstellen, dem Datenkabel 113 und einer Steuergerätschnittstelle. Alternativ kann der Empfang beziehungsweise die Übertragung 320 kabellos mittels einer Funkverbindung zwischen dem Steuergerät 111 und der Kamera 112 erfolgen, beispielsweise mittels einer WLAN- oder Bluetooth-Verbindung. Die von dem Steuergerät 111 empfangenen Bilddaten repräsentieren mindestens das aus dem elektronischen Kameraspeicher 252 der Kamera 112 geladene Ursprungsbild. In Abhängigkeit der empfangenen Bilddaten wird im Schritt 330 ein Zwischenbild erzeugt, nämlich durch eine Deserialisation. Insbesondere wird bei einer fehlerfreien Übertragung der serialsierten Bilddaten durch die Erzeugung 330 des Zwischenbildes das geladene Ursprungsbild als Zwischenbild wieder hergestellt. Anschließend erfolgt eine Ermittlung 350 eines aufbereiteten Bildes in Abhängigkeit des erzeugten Zwischenbildes. Bei der Ermittlung 350 des aufbereiteten Bildes wird beispielsweise eine Transformation des farbigen Zwischenbildes in ein Graustufenbild und/oder eine Anpassung einer Helligkeit der Bildpixel und/oder eine Filterung eines Bildrauschens des Zwischenbildes durchgeführt. Optional kann danach eine Ermittlung 351 einer ersten Prüfsumme in Abhängigkeit einer Bildinformation von mindestens zwei Bildpixeln des aufbereiteten Bildes erfolgen, wobei die Bildinformation jeweils einem Bildpixel zugeordnet ist. Beispielsweise ist die Bildinformation ein Graustufenwert und/oder eine Helligkeit und/oder ein Beschreibungsmaß für die Umgebung des Bildpixels. Des Weiteren kann eine optionale Ermittlung 352 einer zweiten Prüfsumme in Abhängigkeit der Bildinformation von mindestens zwei Bildpixeln des Referenzbildes durchgeführt werden. Das Referenzbild wird aus dem Speicher 240 des Steuergeräts 111 geladen. Anschließend erfolgt ein Vergleich 360 des aufbereiteten Bildes mit dem Referenzbild. Bevorzugt wird das aufbereitete Bild mit dem Referenzbild in Abhängigkeit der ermittelten ersten Prüfsumme und/oder der ermittelten zweiten Prüfsumme verglichen. Danach wird im Schritt 370 bei Abweichung des aufbereiteten Bildes von dem Referenzbild ein Fehlersignal erzeugt. In einer optionalen Ausgestaltung kann es vorgesehen sein, dass das Steuergerät im Schritt 375 mindestens ein Kamerabild der Kamera 112 erfasst, wobei die Erfassung 375 insbesondere mittels einer Kameraoptik 253 erfolgt. Im anschließenden optionalen Schritt 380 wird ein Steuersignal in Abhängigkeit des erfassten Kamerabildes beziehungsweise einer Folge von Kamerabildern der Kamera 112 erzeugt. Das optional erzeugte Steuersignal ist dazu eingerichtet, den Lenkmotor 121, den Antriebsmotor 123, die Bremse 124 und/oder die Anzeigevorrichtung 122 anzusteuern. Anschließend erfolgt optional die Anpassung 390 des Steuersignals in Abhängigkeit des erzeugten Fehlersignals mittels eines optionalen Anpassungsmittels 290.

## Patentansprüche

1. Testverfahren für ein Kamerasystem (110) mit einem Steuergerät (111) und mindestens einer Kamera (112), wobei unmittelbar nach einem Laden (310) eines Betriebssystems des Steuergeräts (111) die folgenden Verfahrensschritte durchgeführt werden
• Erzeugung (311) von übertragungsfähigen Bilddaten in Abhängigkeit mindestens eines aus einem elektronischen Kameraspeicher (252) der Kamera (112) geladenen Ursprungsbildes als Testbild, wobei das mindestens eine Ursprungsbild ein Testmuster repräsentiert, wobei das Testmuster jeweils unterschiedliche Helligkeitswerte, unterschiedliche Grauwerte, unterschiedliche Pixelumgebungen und/oder unterschiedliche Farbwerte aufweist, wobei serialisierte Bilddaten erzeugt werden, welche das geladene Ursprungsbild repräsentieren und als Übertragungstestbild übertragungsfähig sind, und
• Übertragung (320) der erzeugten Bilddaten von der Kamera (112) an das Steuergerät (111),
• Erzeugung (330) eines Zwischenbildes in Abhängigkeit der von dem Steuergerät (111) empfangenen serialisierten Bilddaten mittels eines Deserializers (210),
• Ermittlung (350) eines aufbereiteten Bildes in Abhängigkeit des erzeugten Zwischenbildes,
• Vergleich (360) des aufbereiteten Bildes mit wenigstens einem Referenzbild, wobei das Referenzbild aus einem Speicher (240) des Steuergeräts (111) geladen wird, wobei das Referenzbild ein erwartetes Bild zu dem in Abhängigkeit des geladenen Übertragungstestbildes aufbereiteten Bild repräsentiert, und
• Erzeugung (370) eines Fehlersignals bei Abweichung des aufbereiteten Bildes von dem Referenzbild.

2. Testverfahren nach einem der vorhergehenden Ansprüche, **dadurch gekennzeichnet, dass** nach der Ermittlung (350) des aufbereiteten Bildes die folgenden Verfahrensschritte durchgeführt werden
• Ermittlung (351) einer ersten Prüfsumme in Abhängigkeit einer Bildinformation von mindestens zwei Bildpixeln des aufbereiteten Bildes, wobei die Bildinformation jeweils einem Bildpixel zugeordnet ist, insbesondere ist die Bildinformation ein Graustufenwert und/oder eine Helligkeit und/oder ein Beschreibungsmaß für die Umgebung des Bildpixels,
• Ermittlung (352) einer zweiten Prüfsumme in Abhängigkeit der Bildinformation von mindestens zwei Bildpixeln des Referenzbildes, und
• Vergleich (360) des aufbereiteten Bildes mit dem Referenzbild in Abhängigkeit der ersten Prüfsumme und/oder der zweiten Prüfsumme.

3. Testverfahren nach einem der vorhergehenden Ansprüche, **dadurch gekennzeichnet, dass** die Ermittlung (350) des mindestens einen aufbereiteten Bildes zusätzlich in Abhängigkeit von Testparametern erfolgt.

4. Testverfahren nach einem der vorhergehenden Ansprüche, **dadurch gekennzeichnet, dass** nach der Erzeugung (370) des Fehlersignals die folgenden Verfahrensschritte durchgeführt werden
• Erfassung (375) mindestens eines Kamerabildes der Kamera (112),
• Erzeugung (380) eines Steuersignals des Steuergerätes (111) in Abhängigkeit des erfassten Kamerabildes, wobei das Steuersignal dazu eingerichtet ist, einen Lenkmotor (121), einen Antriebsmotor (123), eine Bremse (124) und/oder eine Anzeigevorrichtung (122) eines Fahrzeugs mit dem Kamerasystem (110) anzusteuern, und
• Anpassung (390) des Steuersignals in Abhängigkeit des erzeugten Fehlersignals.

5. Steuergerät (111) für ein Kamerasystem (110), wobei das Steuergerät (111) unmittelbar nach einem Laden (310) eines Betriebssystems des Steuergeräts (111) dazu eingerichtet ist,
i. mittels einer Empfangseinheit serialisierte Bilddaten als Übertragungstestbild von einer Kamera (112) des Kamerasystems (110) zu empfangen, wobei die Bilddaten ein aus einem Kameraspeicher (252) der Kamera (112) geladenes Ursprungsbild als Testbild repräsentieren, wobei das mindestens eine Ursprungsbild ein Testmuster repräsentiert, wobei das Testmuster jeweils unterschiedliche Helligkeitswerte, unterschiedliche Grauwerte, unterschiedliche Pixelumgebungen und/oder unterschiedliche Farbwerte aufweist, und
ii. ein Fehlersignal bei Abweichung eines aufbereiteten Bildes von einem Referenzbild zu erzeugen, wobei das aufbereitete Bild mittels einer Recheneinheit (210, 220, 230) in Abhängigkeit der empfangenen serialisierten Bilddaten mittels eines Deserializers (210) ermittelt und das Referenzbild aus
einem Speicher (240) des Steuergeräts (111) geladen wird und wobei das Referenzbild ein erwartetes Bild zu dem in Abhängigkeit des empfangen Übertragungstestbildes aufbereiteten Bild repräsentiert.

6. Kamerasystem (110), wobei das Kamerasystem (110)
• mindestens eine Kamera (112) und ein Steuergerät (111) nach Anspruch 5 aufweist, und
• dazu eingerichtet ist, ein Verfahren nach einem der Ansprüche 1 bis 4 durchzuführen.

7. Fahrzeug (100) mit dem Kamerasystem (110) nach Anspruch 6.

## Claims

1. Test method for a camera system (110) having a controller (111) and at least one camera (112), wherein the following method steps are carried out immediately after an operating system of the controller (111) has been loaded (310):
• generating (311) transmissible image data on the basis of at least one original image loaded from an electronic camera memory (252) of the camera (112) as a test image, wherein the at least one original image represents a test pattern, wherein the test pattern has in each case different brightness values, different grayscale values, different pixel surroundings and/or different colour values, wherein serialized image data that represent the loaded original image and are able to be transmitted as transmission test image are generated, and
• transmitting (320) the generated image data from the camera (112) to the controller (111),
• generating (330) an intermediate image on the basis of the serialized image data received by the controller (111) by way of a deserializer (210),
• ascertaining (350) a processed image on the basis of the generated intermediate image,
• comparing (360) the processed image with at least one reference image, wherein the reference image is loaded from a memory (240) of the controller (111), wherein the reference image represents an expected image with respect to the image processed on the basis of the loaded transmission test image, and
• generating (370) an error signal if the processed image deviates from the reference image.

2. Test method according to one of the preceding claims, **characterized in that** the following method steps are carried out after the processed image has been ascertained (350):
• ascertaining (351) a first checksum on the basis of image information from at least two image pixels of the processed image, wherein the image information is assigned in each case to an image pixel; in particular, the image information is a grayscale value and/or a brightness and/or a description metric for the surroundings of the image pixel,
• ascertaining (352) a second checksum on the basis of the image information from at least two image pixels of the reference image, and
• comparing (360) the processed image with the reference image on the basis of the first checksum and/or the second checksum.

3. Test method according to either of the preceding claims, **characterized in that** the at least one processed image is additionally ascertained (350) on the basis of test parameters.

4. Test method according to one of the preceding claims, **characterized in that** the following method steps are carried out after the error signal has been generated (370) :
• capturing (375) at least one camera image of the camera (112),
• generating (380) a control signal of the controller (111) on the basis of the captured camera image, wherein the control signal is configured to actuate a steering motor (121), a drive motor (123), a brake (124) and/or a display device (122) of a vehicle having the camera system (110), and
• adapting (390) the control signal on the basis of the generated error signal.

5. Controller (111) for a camera system (110), wherein, immediately after an operating system of the controller (111) has been loaded (310), the controller (111) is configured
i. to receive serialized image data as a transmission test image from a camera (112) of the camera system (110) by way of a reception unit, wherein the image data represent an original image loaded from a camera memory (252) of the camera (112) as test image, wherein the at least one original image represents a test pattern, wherein the test pattern has in each case different brightness values, different grayscale values, different pixel surroundings and/or different colour values, and
ii. to generate an error signal if a processed image deviates from a reference image, wherein the processed image is ascertained by way of a computing unit (210, 220, 230) on the basis of the received serialized image data by way of a deserializer (210), and the reference image is loaded from a memory (240) of the controller (111), and wherein the reference image represents an expected image with respect to the image processed on the basis of the received transmission test image.

6. Camera system (110), wherein the camera system (110)
• has at least one camera (112) and a controller (111) according to Claim 5, and
• is configured to carry out a method according to one of Claims 1 to 4.

7. Vehicle (100) having the camera system (110) according to Claim 6.

## Revendications

1. Procédé de test pour un système de caméras (110), comprenant un appareil de commande (111) et au moins une caméra (112), dans lequel, immédiatement après un chargement (310) d'un système d'exploitation de l'appareil de commande (111), les étapes de procédé suivantes sont exécutées
• générer (311) en tant qu'image de test des données d'image transmissibles en fonction d'au moins une image d'origine chargée à partir d'une mémoire de caméra électronique (252) de la caméra (112), dans lequel ladite au moins une image d'origine représente un motif de test, dans lequel le motif de test présente respectivement différentes valeurs de luminosité, différentes valeurs de gris, différents environnements de pixels et/ou différentes valeurs de couleur, dans lequel des données d'image sérialisées sont générées qui représentent l'image d'origine chargée et sont transmissibles en tant qu'image de test de transmission, et
• transmettre (320) les données d'image générées de la caméra (112) à l'appareil de commande (111),
• générer (330) au moyen d'un désérialiseur (210) une image intermédiaire en fonction des données d'image sérialisées reçues de l'appareil de commande (111),
• déterminer (350) une image traitée en fonction de l'image intermédiaire générée,
• comparer (360) l'image traitée avec au moins une image de référence, l'image de référence étant chargée à partir d'une mémoire (240) de l'appareil de commande (111), l'image de référence représentant une image attendue pour l'image traitée en fonction de l'image de test de transmission, et
• générer (370) un signal d'erreur en cas d'écart de l'image traitée par rapport à l'image de référence.

2. Procédé de test selon l'une quelconque des revendications précédentes, **caractérisé en ce qu'**après la détermination (350) de l'image traitée, les étapes de procédé suivantes sont exécutées
• déterminer (351) une première somme de contrôle en fonction d'une information d'image provenant d'au moins deux pixels d'image de l'image traitée, dans lequel l'information d'image est respectivement associée à un pixel d'image, en particulier l'information d'image est une valeur de niveau de gris et/ou une luminosité et/ou une mesure de description pour l'environnement du pixel d'image,
• déterminer (352) une deuxième somme de contrôle en fonction de l'information d'image provenant d'au moins deux pixels d'image de l'image de référence, et
• comparer (360) l'image traitée avec l'image de référence en fonction de la première somme de contrôle et/ou de la deuxième somme de contrôle.

3. Procédé de test selon l'une quelconque des revendications précédentes, **caractérisé en ce que** la détermination (350) de ladite au moins une image traitée est de plus effectuée en fonction de certains paramètres de test.

4. Procédé de test selon l'une quelconque des revendications précédentes, **caractérisé en ce qu'**après la génération (370) du signal d'erreur, les étapes de procédé suivantes sont exécutées
• acquérir (375) au moins une image de caméra de la caméra (112),
• générer (380) un signal de commande de l'appareil de commande (111) en fonction de l'image de caméra acquise, le signal de commande étant conçu pour piloter un moteur de direction (121), un moteur d'entraînement (123), un frein (124) et/ou un dispositif d'affichage (122) d'un véhicule comprenant le système de caméras (110), et
• adapter(390) le signal de commande en fonction du signal d'erreur généré.

5. Appareil de commande (111) pour un système de caméras (110), dans lequel, directement après un chargement (310) d'un système d'exploitation de l'appareil de commande (111), l'appareil de commande (111) est conçu pour
i) recevoir au moyen d'une unité de réception des données d'image sérialisées en tant qu'image de test de transmission d'une caméra (112) du système de caméras (110), dans lequel les données d'image représentent en tant qu'image de test une image d'origine chargée à partir d'une mémoire de caméra (252) de la caméra (112), dans lequel ladite au moins une image d'origine représente un motif de test, dans lequel le motif de test présente respectivement différentes valeurs de luminosité, différentes valeurs de gris, différents environnements de pixels et/ou différentes valeurs de couleur, et
ii) générer un signal d'erreur en cas d'écart d'une image traitée par rapport à une image de référence, dans lequel l'image traitée est déterminée au moyen d'une unité de calcul (210, 220, 230) en fonction des données d'image sérialisées reçues au moyen d'un désérialiseur (210), et l'image de référence est chargée à partir d'une mémoire (240) de l'appareil de commande (111), et dans lequel l'image de référence représente une image attendue pour l'image traitée en fonction de l'image de test de transmission reçue.

6. Système de caméras (110), dans lequel le système de caméra (110)
• présente au moins une caméra (112) et un appareil de commande (111) selon la revendication 5, et
• est conçu pour exécuter un procédé selon l'une quelconque des revendications 1 à 4.

7. Véhicule (100), comprenant le système de caméra (110) selon la revendication 6.
